# EUROPEAN PATENT APPLICATION

(11) **EP 4 382 549 A1**
(43) Date of publication of application: **12.06.2024**
(21) Application number: 23215001.1
(22) Date of filing: 07.12.2023
(51) Int. Cl.: C08G 64/06, C08G 64/42, C08G 59/14, C08L 69/00, C08L 71/00, C08J 11/10

(54) **POLYCARBONATE OLIGOMER, MANUFACTURING METHOD THEREOF, CURABLE COMPOSITION, EPOXY CROSSLINKED PRODUCT, AND METHOD FOR DEGRADING EPOXY CROSSLINKED PRODUCT BY AMINOLYSIS**

(30) Priority: 09.12.2022 TW 111147351
(71) Applicant: Swancor Innovation & Incubation Co., Ltd., Nantou City, Nantou County 540028 (TW)
(72) Inventor: WANG, Meng-Wei, 540028 Nantou City, Nantou County (TW); HUANG, Yun-Wen, 540028 Nantou City, Nantou County (TW)
(74) Representative: D Young & Co LLP

(57) **Abstract**

A polycarbonate oligomer and a manufacturing method for the polycarbonate oligomer, a curable composition, an epoxy crosslinked product and a method for degrading the epoxy crosslinked product by aminolysis are provided. The polycarbonate oligomer includes a structure represented by formula (I), and formula (I) is defined as in the specification.

## Description

### BACKGROUND

### Technical Field

The present disclosure relates to an oligomer and a manufacturing method thereof. More particularly, the present disclosure relates to a polycarbonate oligomer, a manufacturing method thereof, a curable composition, an epoxy crosslinked product prepared thereby, and a method for degrading an epoxy crosslinked product by aminolysis.

### Description of Related Art

Polycarbonate (PC) is prepared by transesterification of bisphenol A and diphenyl carbonate at the high temperature at currently industry. The polycarbonate is a polymer material with good optical and mechanical properties, and is widely used in a drinking bucket, an optical disc, a data access, a car part and other consumer products.

Nowadays, the recycling of the polycarbonate is still mainly physically recycled in the form of mechanical processing or physical mixing, and the defects in the physical properties of the recycled materials are supplemented by adding the new materials. Although the operation is relatively simple, its application is still greatly limited because the physical properties of the polycarbonate are easily destroyed during the recycling process. Furthermore, when the recovered polycarbonate is mixed with the epoxy resin for re-curing, it is often still necessary to dissolve the polycarbonate and the epoxy resin in the solvent for the subsequent curing operations. Therefore, the re-cure and reuse of the existing polycarbonate after recycling still requires the participation of solutions, which is inconvenient to operate and unfavorable to the environment.

In response to the future recycling issues, many academic articles have begun to discuss chemical recycling methods, which obtain bisphenol A monomer (BPA) by the degradation and then return it to the synthesis of polycarbonate. However, in order to obtain the high-purity bisphenol A monomer in this way, a large amount of solvents and cumbersome separation and purification steps are required, which increases the difficulty of its industrialization.

Therefore, how to use the waste polycarbonate as the hardener for epoxy resin and cure it with the epoxy resin, so that the crosslinked product has the characteristics of being recyclable and decomposable to achieve the sustainable utilization of waste polycarbonate, which is the goal of the relevant industry.

### SUMMARY

According to one aspect of the present disclosure, a polycarbonate oligomer is provided. The polycarbonate oligomer includes a structure represented by formula (I): 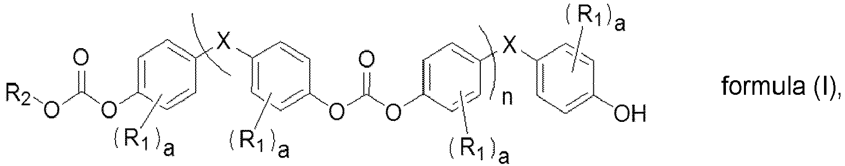 wherein R₁ is a hydrogen atom, an alkyl group of 1 to 6 carbon atoms, an allyl group, an alkoxy group of 1 to 6 carbon atoms, an aryl group of 6 to 12 carbon atoms or a halogen atom, R₂ is an alkyl group of 1 to 10 carbon atoms, an ether group of 1 to 10 carbon atoms, a cycloalkyl group of 3 to 6 carbon atoms, a structure represented by formula (1), formula (2), formula (3), formula (4), formula (5), formula (6) or formula (7): 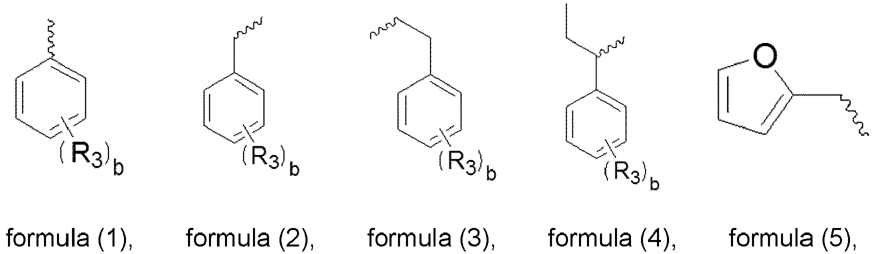 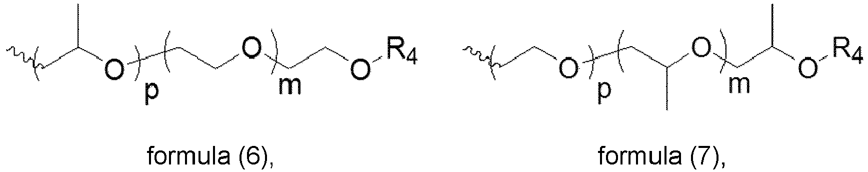 wherein X is a single bond, a structure represented by formula (8), formula (9), formula (10), formula (11), formula (12), formula (13), formula (14), formula (15), formula (16), formula (17) or formula (18): 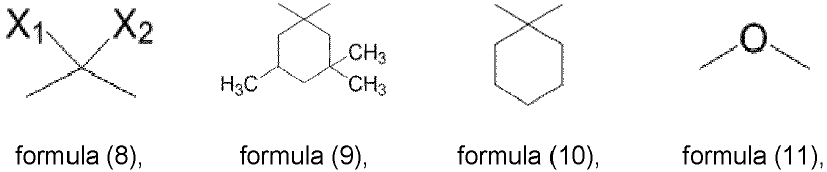 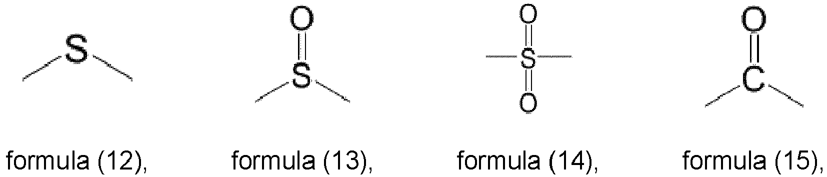 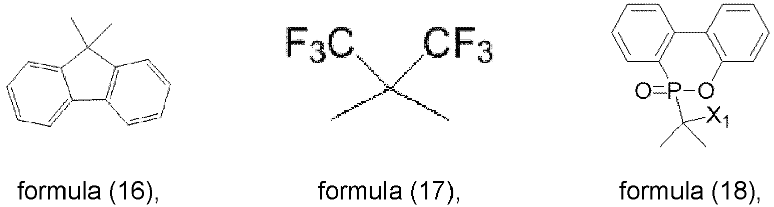 wherein R₃ is the hydrogen atom, the alkyl group of 1 to 6 carbon atoms, the allyl group, the alkoxy group of 1 to 6 carbon atoms, the aryl group of 6 to 12 carbon atoms or the halogen atom, R₄ is the hydrogen atom or a methyl group, a is an integer from 0 to 4, b is an integer from 0 to 5, n is any number from 0 to 60, m and p are each independently any number from 0 to 50. X₁ and X₂ are each independently the hydrogen atom, the alkyl group of 1 to 6 carbon atoms or the aryl group of 6 to 12 carbon atoms.

According to another aspect of the present disclosure, a manufacturing method for the polycarbonate oligomer according to the foregoing aspect includes steps as follows. A dissolving step is performed, wherein a polycarbonate is dissolved in a solvent, and heated to a heating temperature to stir to form a first mixture. An adding step is performed, wherein a compound represented by formula (II) is added to the first mixture and maintained at the heating temperature to react to form a second mixture: 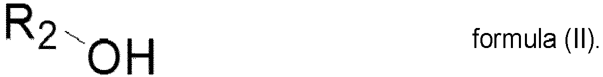 A washing step is performed, wherein the second mixture is cooled and precipitation washed with an alcoholic solvent to form a third mixture. A filtering step is performed, wherein the third mixture is filtered and dried to obtain the polycarbonate oligomer.

According to the manufacturing method for the polycarbonate oligomer of the foregoing aspect, the solvent can be selected from a group consisting of N,N-dimethylacetamide, N-methylpyrrolidone, dimethylformamide, anisole, dimethyl sulfoxide, propylene glycol methyl ether acetate, and propylene glycol methyl ether propionate.

According to the manufacturing method for the polycarbonate oligomer of the foregoing aspect, the heating temperature can be 100°C to 180°C.

According to the manufacturing method for the polycarbonate oligomer of the foregoing aspect, a molar ratio of the polycarbonate oligomer to the compound represented by formula (II) can be 1:10 to 1:90.

According to further another aspect of the present disclosure, a curable composition is provided. The curable composition includes the polycarbonate oligomer according to the foregoing aspect, an epoxy resin and a catalyst, which are mixed for sample preparation at a mixing temperature, wherein an equivalence ratio of a carbonate group of the polycarbonate oligomer to an epoxy group of the epoxy resin is 0.5 to 3.0.

According to the curable composition of the foregoing aspect, the catalyst can be selected from a group consisting of 4-dimethylaminopyridine, imidazole, 2-methylimidazole, 2-phenylimidazole and 2-ethyl-4-methylimidazole.

According to the curable composition of the foregoing aspect, an added amount of the catalyst can be ranged from 0.05% by weight to 5.0% by weight of an amount of the epoxy resin.

According to the curable composition of the foregoing aspect, the mixing temperature can be 90°C to 170°C.

According to still another aspect of the present disclosure, an epoxy crosslinked product is provided. The epoxy crosslinked product is obtained by performing a curing reaction with the curable composition according to the foregoing aspect.

According to the epoxy crosslinked product of the foregoing aspect, the curing reaction can be completed by heating the curable composition, and a curing temperature of the curing reaction can be 150°C to 240°C.

According to yet another aspect of the present disclosure, a method for degrading an epoxy crosslinked product by aminolysis includes steps as follows. The epoxy crosslinked product according to the foregoing aspect is provided. A degrading step is performed, wherein an aliphatic amine group-containing compound is reacted with the epoxy crosslinked product to degrade the epoxy crosslinked product by aminolysis.

According to the method for degrading the epoxy crosslinked product by aminolysis of the foregoing aspect, the epoxy crosslinked product can be degraded to form a phenoxy resin represented by formula (III): 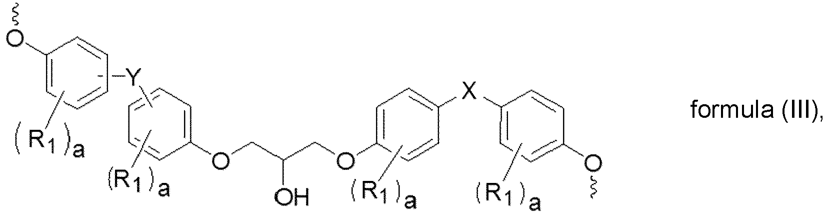 wherein Y can be the single bond, the structure represented by formula (8), formula (9), formula (10), formula (11), formula (12), formula (13), formula (14), formula (15), formula (16), formula (17), formula (18) or a structure represented by formula (19):

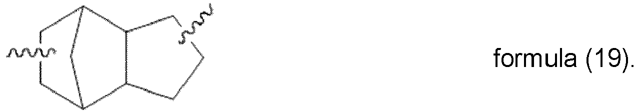

### BRIEF DESCRIPTION OF THE DRAWINGS

The present disclosure can be more fully understood by reading the following detailed description of the embodiment, with reference made to the accompanying drawings as follows:
Fig. 1 is a flow chart of a manufacturing method for a polycarbonate oligomer according to one embodiment of the present disclosure.
Fig. 2 is a flow chart of a manufacturing method for an epoxy crosslinked product according to another embodiment of the present disclosure.
Fig. 3 is a flow chart of a method for degrading an epoxy crosslinked product by aminolysis according to still another embodiment of the present disclosure.
Fig. 4 is a ¹H-NMR spectrum of Example 1.
Fig. 5 is a ¹H-NMR spectrum of Comparative Example 1.
Fig. 6 is a FTIR spectrum of Example 1.
Fig. 7 is a FTIR spectrum of Example 4.
Fig. 8 is a ¹H-NMR spectrum of Example 7.

### DETAILED DESCRIPTION

The present disclosure will be further exemplified by the following specific embodiments. However, the embodiments can be applied to various inventive concepts and can be embodied in various specific ranges. The specific embodiments are only for the purposes of description, and are not limited to these practical details thereof.

In the present disclosure, the compound structure can be represented by a skeleton formula, and the representation can omit the carbon atom, the hydrogen atom and the carbon-hydrogen bond. In the case that the functional group is depicted clearly in the structural formula, the depicted one is preferred.

In the present disclosure, in order to concise and smooth, "polycarbonate oligomer, comprising a structure represented by formula (I)" can be represented as a polycarbonate oligomer represented by formula (I) or a polycarbonate oligomer (I) in some cases, and the other compounds or groups can be represented in the same manner.

### <Polycarbonate Oligomer>

A polycarbonate oligomer is provided of the present disclosure, which includes a structure represented by formula (I): 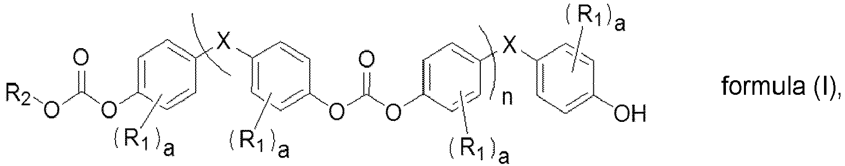 wherein R₁ is a hydrogen atom, an alkyl group of 1 to 6 carbon atoms, an allyl group, an alkoxy group of 1 to 6 carbon atoms, an aryl group of 6 to 12 carbon atoms or a halogen atom, R₂ is an alkyl group of 1 to 10 carbon atoms, an ether group of 1 to 10 carbon atoms, a cycloalkyl group of 3 to 6 carbon atoms, a structure represented by formula (1), formula (2), formula (3), formula (4), formula (5), formula (6) or formula (7): 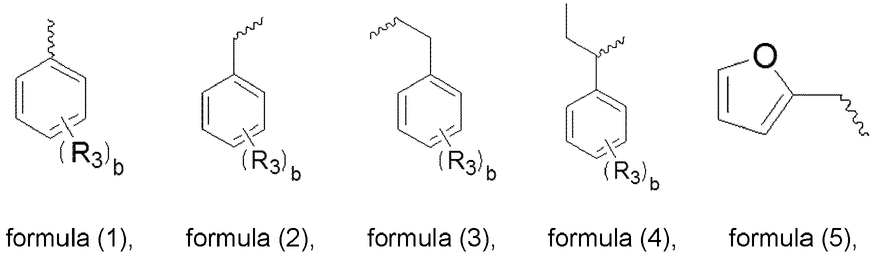 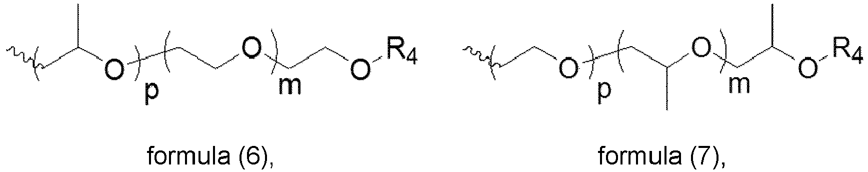 wherein X is a single bond, a structure represented by formula (8), formula (9), formula (10), formula (11), formula (12), formula (13), formula (14), formula (15), formula (16), formula (17) or formula (18): 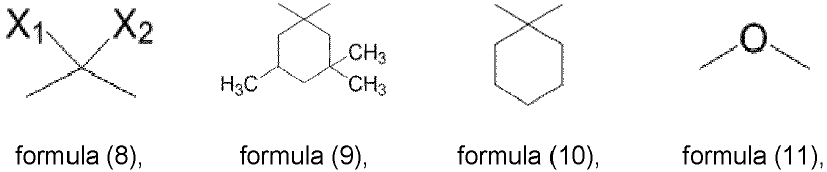 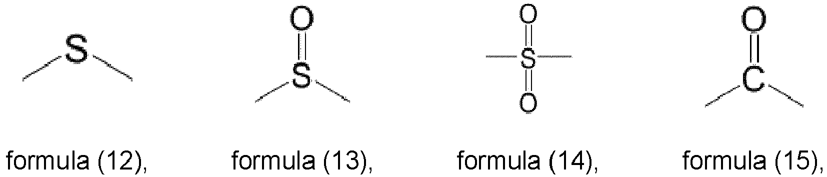 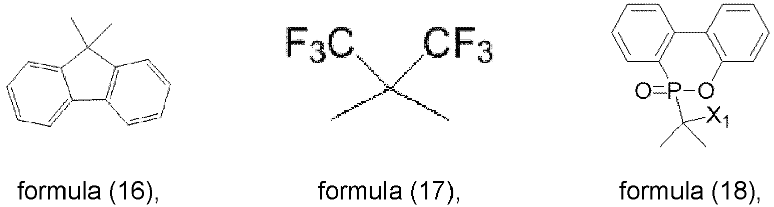 wherein R₃ is the hydrogen atom, the alkyl group of 1 to 6 carbon atoms, the allyl group, the alkoxy group of 1 to 6 carbon atoms, the aryl group of 6 to 12 carbon atoms or the halogen atom, R₄ is the hydrogen atom or a methyl group, a is an integer from 0 to 4, b is an integer from 0 to 5, n is any number from 0 to 60, m and p are each independently any number from 0 to 50. X₁ and X₂ are each independently the hydrogen atom, the alkyl group of 1 to 6 carbon atoms or the aryl group of 6 to 12 carbon atoms.

Therefore, the polycarbonate oligomer of the present disclosure has the better processability compared to the polycarbonate with high molecular weight, and has the better compatibility with the epoxy resin, which can be used as the epoxy resin hardener.

### <Manufacturing Method for Polycarbonate Oligomer >

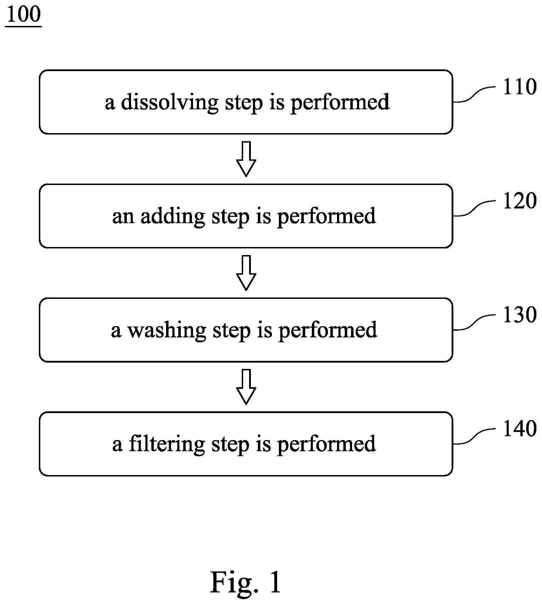

Reference is made to Fig. 1, which is a flow chart of a manufacturing method for a polycarbonate oligomer 100 according to one embodiment of the present disclosure. In Fig. 1, the manufacturing method for the polycarbonate oligomer 100 includes a step 110, a step 120, a step 130 and a step 140.

In the step 110, a dissolving step is performed, wherein a polycarbonate is dissolved in a solvent, and heated to a heating temperature to stir to form a first mixture. Specifically, the solvent is preferably a non-alcoholic or non-amine solvent that has a boiling point higher than 110°C and can dissolve the polycarbonate. Therefore, the solvent of the present disclosure can be selected from a group consisting of N,N-dimethylacetamide (DMAc), N-methylpyrrolidone (NMP), dimethylformamide (DMF), anisole, dimethyl sulfoxide (DMSO), propylene glycol methyl ether acetate, and propylene glycol methyl ether propionate, and the heating temperature can be 100°C to 180°C, preferably can be 130°C to 170°C.

In the step 120, an adding step is performed, wherein a compound represented by formula (II) is added to the first mixture and maintained at the heating temperature to react to form a second mixture: 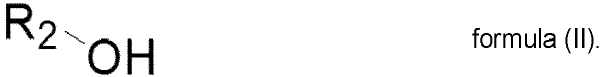 The definition of R₂ can refer to the aforementioned paragraph, and will not be described herein. Furthermore, a molar ratio of the polycarbonate oligomer to the compound represented by formula (II) can be 1:10 to 1:90, preferably can be 1:40 to 1:70.

In the step 130, a washing step is performed, wherein the second mixture is cooled and precipitation washed with an alcoholic solvent to form a third mixture. Specifically, the alcoholic solvent can be methanol, ethanol or isopropyl, but is not limited thereto.

In the step 140, a filtering step is performed, wherein the third mixture is filtered and dried to obtain the polycarbonate oligomer, which is a powder product.

### <Curable Composition>

A curable composition is further provided of the present disclosure, which includes the aforementioned polycarbonate oligomer, an epoxy resin and a catalyst. An equivalence ratio of a carbonate group of the polycarbonate oligomer to an epoxy group of the epoxy resin can be 0.5 to 3.0.

The aforementioned epoxy resin can be diglycidyl ether of bisphenol A (DGEBA), phenol novolac epoxy (PNE), cresol novolac epoxy (CNE), dicyclopentadiene-phenol epoxy (DNE), naphthalene-containing epoxy, phosphorus epoxy resin or a mixture thereof. In other words, the aforementioned epoxy resin can be used singly or two or more kinds simultaneously, and when two or more kinds are used, it can be mixed in any ratio. Therefore, the required properties can be given to the subsequent crosslinked product by selecting the appropriate epoxy resin.

The aforementioned catalyst can be selected from a group consisting of 4-dimethylaminopyridine (DMAP), imidazole, 2-methylimidazole, 2-phenylimidazole and 2-ethyl-4-methylimidazole. Therefore, the catalyst can interact with the epoxy group of the epoxy resin to facilitate the subsequent curing reaction. Specifically, an added amount of the aforementioned catalyst can be ranged from 0.05% by weight to 5.0% by weight of an amount of the epoxy resin, preferably can be ranged from 0.1% by weight to 0.5% by weight.

In detail, the curable composition is prepared by mixing the polycarbonate oligomer represented by formula (I), the epoxy resin and the catalyst are mixed for sample preparation at a mixing temperature, wherein the mixing temperature can be 90°C to 170°C, preferably can be 110°C to 140°C. If the temperature is too low, it will cause uneven mixing. In contrast, if the temperature is too high, it will gel due to the curing reaction, which is difficult to prepare sample.

### <Epoxy Crosslinked Product>

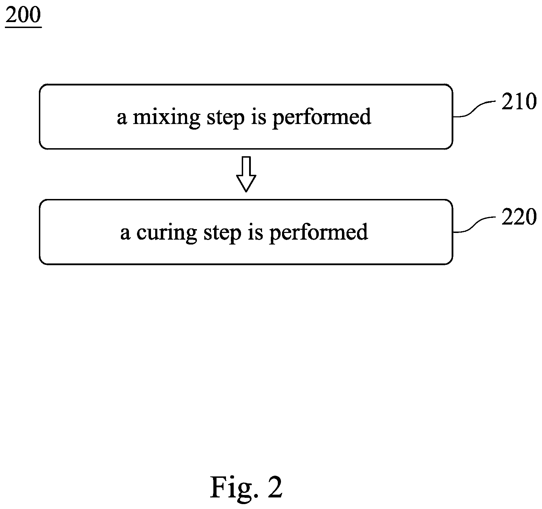

An epoxy crosslinked product is further provided of the present disclosure, which is obtained by performing a curing reaction with the aforementioned curable composition. The aforementioned curing reaction is referred with Fig. 2, which is a flow chart of a manufacturing method for an epoxy crosslinked product 200 according to another embodiment of the present disclosure. In Fig. 2, the manufacturing method for the epoxy crosslinked product 200 includes a step 210 and a step 220.

In the step 210, a mixing step is performed, wherein the polycarbonate oligomer represented by formula (I), the epoxy resin and the catalyst are mixed to obtain the curable composition. Specifically, the polycarbonate oligomer, the epoxy resin and the catalyst can be formed a solid prepolymer containing the curable composition by the step 210. The detail of the polycarbonate oligomer, the epoxy resin and the catalyst can refer to the aforementioned paragraph, and will not be described herein.

In the step 220, a curing step is performed, wherein the polycarbonate oligomer and the epoxy resin are cross-linked by the catalyst to form the epoxy crosslinked product, wherein the curing reaction is completed by heating the curable composition, and a curing temperature of the curing reaction can be 150°C to 240°C, preferably can be 170°C to 200°C.

### <Method for Degrading Epoxy Crosslinked Product by Aminolysis>

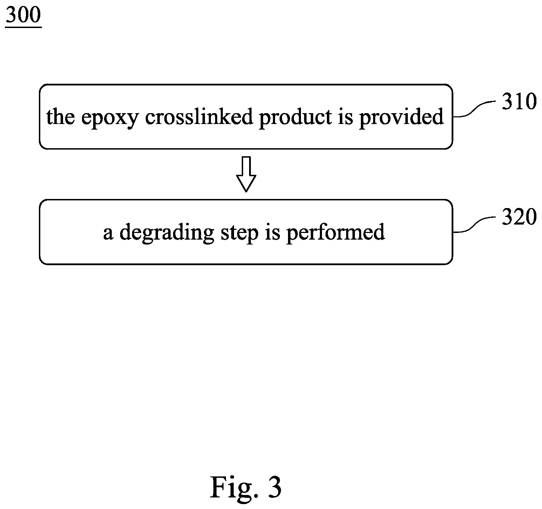

Reference is made to Fig. 3, which is a flow chart of a method for degrading an epoxy crosslinked product by aminolysis 300 according to still another embodiment of the present disclosure. In Fig. 3, the method for degrading the epoxy crosslinked product by aminolysis 300 includes a step 310 and a step 320.

In the step 310, the aforementioned epoxy crosslinked product is provided. In the step 320, a degrading step is performed, wherein an aliphatic amine group-containing compound is reacted with the epoxy crosslinked product to degrade the epoxy crosslinked product by aminolysis.

Moreover, after the aforementioned epoxy crosslinked product degraded, a phenoxy resin represented by formula (III) can be obtained by cleaning with the alcohol: 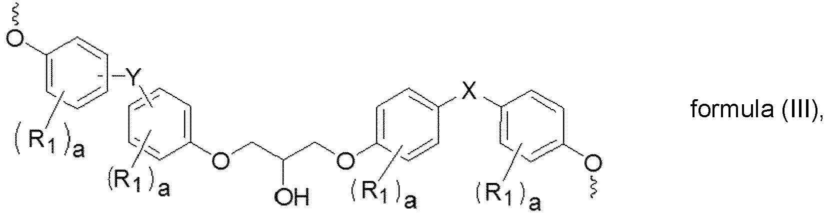 The definition of X can refer to the aforementioned paragraph, and will not be described herein. Furthermore, Y is the single bond, the structure represented by formula (8), formula (9), formula (10), formula (11), formula (12), formula (13), formula (14), formula (15), formula (16), formula (17), formula (18) or a structure represented by formula (19): 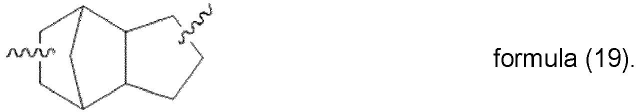 The phenoxy resin represented by formula (III) is beneficial to be reused as an auxiliary agent.

The present disclosure will be further exemplified by the following specific embodiments so as to facilitate utilizing and practicing the present disclosure completely by the people skilled in the art without over-interpreting and over-experimenting. However, the readers should understand that the present disclosure should not be limited to these practical details thereof, that is, these practical details are used to describe how to implement the materials and methods of the present disclosure and are not necessary.

### <Example and Comparative Example>

### <Preparation of Polycarbonate Oligomer>

Example 1: 100 g (4×10⁻³ mole) of polycarbonate particles (commodity code PC-122 from CHIMEI Corporation) is mixed with 150 g of N,N-dimethylacetamide solvent, the temperature is raised to 150°C and maintained for stirring, so that the polycarbonate particles are dissolved in the solvent to form the first mixture. Next, 18.3 g (0.17 mole) of benzyl alcohol is added and reacted for 9 hours to form the second mixture. Then, the second mixture is cooled down and poured into the methanol for washing and precipitating to form the third mixture, and the third mixture is filtered by suction filtration to obtain the white powder and placed in the vacuum oven at 110°C to dry to obtain the polycarbonate oligomer powder of Example 1, the yield thereof is 75%. Specifically, the number average molecular weight (Mn) of polycarbonate PC-122 is 24,400, and the weight average molecular weight (Mw) of polycarbonate PC-122 is 45,488. Furthermore, the polycarbonate oligomer of Example 1 is measured by gel chromatography permeability (GPC), the number average molecular weight (Mn) and the weight average molecular weight (Mw) thereof is 2,391 and 3,532, respectively.

Example 2: 100 g (4.1×10⁻³ mole) of polycarbonate particles (commodity code PC-122 from CHIMEI Corporation) is mixed with 150 g of N,N-dimethylacetamide solvent, the temperature is raised to 150°C and maintained for stirring, so that the polycarbonate particles are dissolved in the solvent to form the first mixture. Next, 27.41 g (0.25 mole) of benzyl alcohol is added and reacted for 9 hours to form the second mixture. Then, the second mixture is cooled down and poured into the methanol for washing and precipitating to form the third mixture, and the third mixture is filtered by suction filtration to obtain the white powder and placed in the vacuum oven at 110°C to dry to obtain the polycarbonate oligomer powder of Example 2, the yield thereof is 45%. Specifically, the number average molecular weight (Mn) of polycarbonate PC-122 is 24,400, and the weight average molecular weight (Mw) of polycarbonate PC-122 is 45,488. Furthermore, the polycarbonate oligomer of Example 2 is measured by gel chromatography permeability (GPC), the number average molecular weight (Mn) and the weight average molecular weight (Mw) thereof is 2,163 and 2,747, respectively.

Example 3: 100 g (4.3×10⁻³ mole) of waste polycarbonate is mixed with 150 g of N,N-dimethylacetamide solvent, the temperature is raised to 150°C and maintained for stirring, so that the waste polycarbonate is dissolved in the solvent to form the first mixture. Next, 18.3 g (0.17 mole) of benzyl alcohol is added and reacted for 9 hours to form the second mixture. Then, the second mixture is cooled down and poured into the methanol for washing and precipitating to form the third mixture, and the third mixture is filtered by suction filtration to obtain the white powder and placed in the vacuum oven at 110°C to dry to obtain the polycarbonate oligomer powder of Example 3, the yield thereof is 78%. Specifically, after the measurement by gel chromatography permeability (GPC), the number average molecular weight (Mn) of the waste polycarbonate is 23,512, and the weight average molecular weight (Mw) of the waste polycarbonate is 44,758, while the number average molecular weight (Mn) of the polycarbonate oligomer of Example 3 is 3,561, and the weight average molecular weight (Mw) of the polycarbonate oligomer of Example 3 is 5,707.

Comparative Example 1: 100 g (4.1×10⁻³ mole) of polycarbonate particles (commodity code PC-122 from CHIMEI Corporation) is mixed with 150 g of N,N-dimethylacetamide solvent, the temperature is raised to 150°C and maintained for stirring, so that the polycarbonate particles are dissolved in the solvent to form the first mixture. Next, 4.58 g (0.04 mole) of benzyl alcohol is added and reacted for 9 hours to form the second mixture. Then, the second mixture is cooled down and poured into the methanol for washing and precipitating to form the third mixture, and the third mixture is filtered by suction filtration to obtain the white powder and placed in the vacuum oven at 110°C to dry to obtain the polycarbonate oligomer powder of Comparative Example 1, the yield thereof is 88%. Specifically, the number average molecular weight (Mn) of polycarbonate PC-122 is 24,400, and the weight average molecular weight (Mw) of polycarbonate PC-122 is 45,488. Furthermore, the polycarbonate oligomer of Comparative Example 1 is measured by gel chromatography permeability (GPC), the number average molecular weight (Mn) and the weight average molecular weight (Mw) thereof is 8,798 and 10,777, respectively.

The reaction equation of Example 1 to Example 3 and Comparative Example 1 is shown in Table 1.

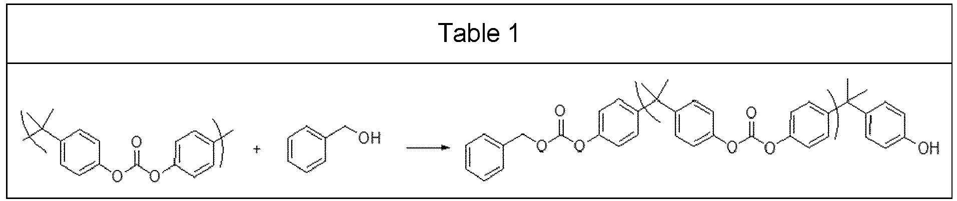

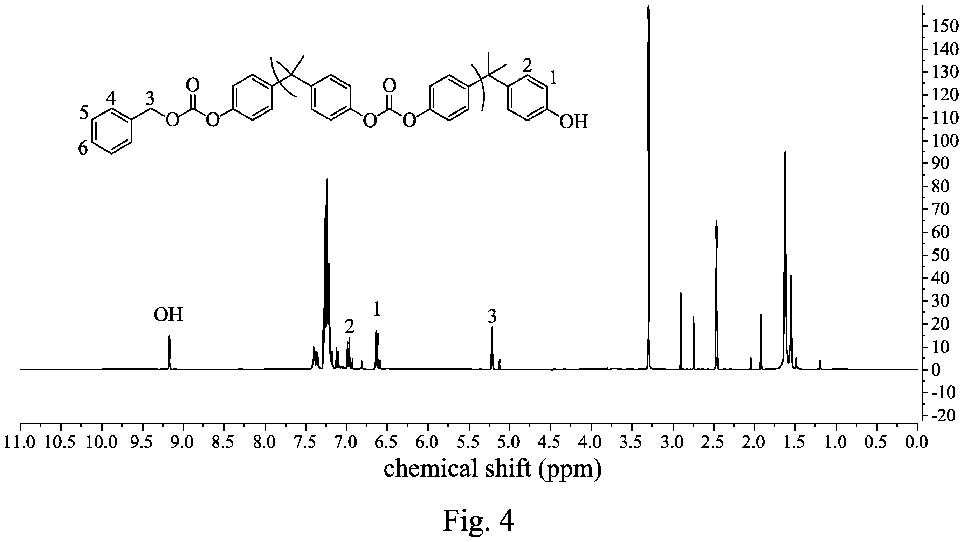

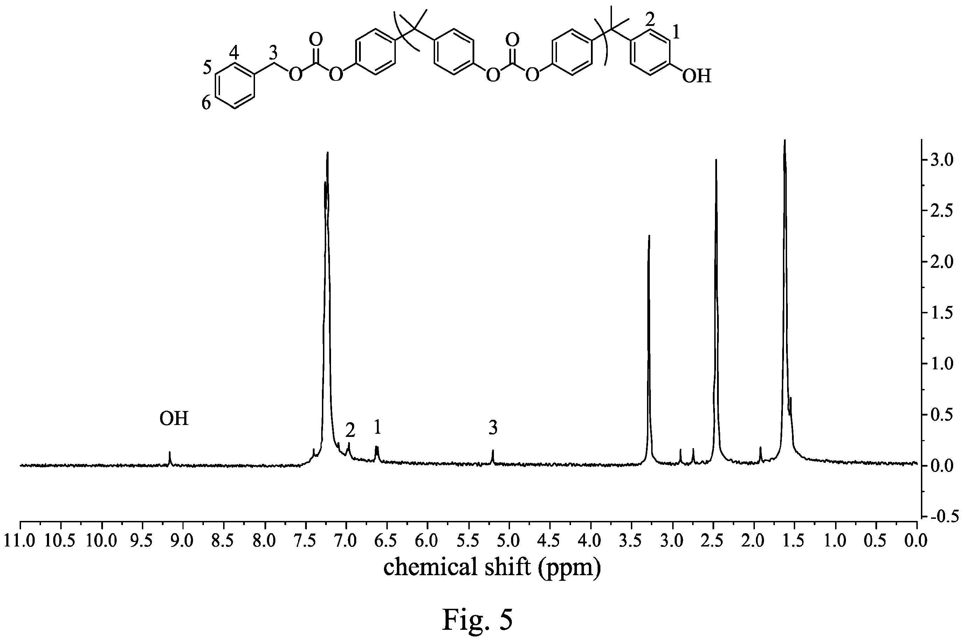

Example 1 to Example 3 and Comparative Example 1 are performed ¹H-NMR analysis to confirm the structure of Example 1 to Example 3 and Comparative Example 1. Reference is made to Fig. 4 and Fig. 5, wherein Fig. 4 is a ¹H-NMR spectrum of Example 1. Fig. 5 is a ¹H-NMR spectrum of Comparative Example 1. The ¹H-NMR spectrum of Example 2 and Example 3 is similar to that of Example 1, and is not shown herein. As shown in Fig. 4 and Fig. 5, the products of Example 1 to Example 3 are all the polycarbonate oligomer, and the molecular weight of Comparative Example 1 is larger than that of Example 1 to Example 3.

### <Preparation of Epoxy Crosslinked Product>

Example 4: 2 g of Example 1 (127.14 g/eq) and 2.91 g of diglycidyl ether of bisphenol A (commodity code BE188 from CHANG CHUN PLASTICS CO., LTD.) are mixed at the equivalence ratio of 1 to melt and stir at 110°C. After mixing, 0.006 g of 2-phenylimidazole (0.2 wt% of BE188) as the catalyst is added at 90°C, and a mixed prepolymer is obtained by melting and stirring evenly. Then, the mixed prepolymer is placed in the oven at 175°C for curing, and the curing time is 30 minutes, so that the epoxy crosslinked product of Example 4 can be obtained.

Example 5: 2 g of Example 2 (127.14 g/eq) and 2.91 g of diglycidyl ether of bisphenol A (commodity code BE188 from CHANG CHUN PLASTICS CO., LTD.) are mixed at the equivalence ratio of 1 to melt and stir at 110°C. After mixing, 0.006 g of 2-phenylimidazole (0.2 wt% of BE188) as the catalyst is added at 90°C, and the other steps are the same as those of Example 4, so that the epoxy crosslinked product of Example 5 can be obtained.

Example 6: 2 g of Example 3 (127.14 g/eq) and 2.91 g of diglycidyl ether of bisphenol A (commodity code BE188 from CHANG CHUN PLASTICS CO., LTD.) are mixed at the equivalence ratio of 1 to melt and stir at 110°C. After mixing, 0.006 g of 2-phenylimidazole (0.2 wt% of BE188) as the catalyst is added at 90°C, and the other steps are the same as those of Example 4, so that the epoxy crosslinked product of Example 6 can be obtained.

Comparative Example 2: 2 g of polycarbonate (commodity code PC-122 from CHIMEI Corporation, 127.14 g/eq) and 2.91 g of diglycidyl ether of bisphenol A (commodity code BE188 from CHANG CHUN PLASTICS CO., LTD.) are mixed at the equivalence ratio of 1 to melt and stir at 140°C, but cannot be completely melted and mixed. Furthermore, 0.006 g of 2-phenylimidazole (0.2 wt% of BE188) as the catalyst is added at 140°C, but is gelled immediately and cannot be mixed smoothly to obtain the prepolymer.

Comparative Example 3: 2 g of polycarbonate (commodity code PC-122 from CHIMEI Corporation, 127.14 g/eq) and 2.91 g of diglycidyl ether of bisphenol A (commodity code BE188 from CHANG CHUN PLASTICS CO., LTD.) are mixed at the equivalence ratio of 1 to melt and stir at 140°C. After mixing, 0.006 g of 4-dimethylaminopyridine (0.2 wt% of BE188) as the catalyst is added at 140°C, but is gelled immediately and cannot be mixed smoothly to obtain the prepolymer.

Comparative Example 4: 2 g of waste polycarbonate (127.14 g/eq) and 2.91 g of diglycidyl ether of bisphenol A (commodity code BE188 from CHANG CHUN PLASTICS CO., LTD.) are mixed at the equivalence ratio of 1 to melt and stir at 140°C. After mixing, 0.006 g of 2-phenylimidazole (0.2 wt% of BE188) as the catalyst is added at 140°C, but is gelled immediately and cannot be mixed smoothly to obtain the prepolymer.

Comparative Example 5: 2 g of polycarbonate oligomer of Comparative Example 1 (127.14 g/eq) and 2.91 g of diglycidyl ether of bisphenol A (commodity code BE188 from CHANG CHUN PLASTICS CO., LTD.) are mixed at the equivalence ratio of 1 to melt and stir at 140°C. After mixing, 0.006 g of 2-phenylimidazole (0.2 wt% of BE188) as the catalyst is added at 140°C, but is gelled immediately and cannot be mixed smoothly to obtain the prepolymer.

Comparative Example 6: 2 g of phenolic resin (commodity code PF8110 from CHANG CHUN PLASTICS CO., LTD., 127.14 g/eq) and 2.91 g of diglycidyl ether of bisphenol A (commodity code BE188 from CHANG CHUN PLASTICS CO., LTD.) are mixed at the equivalence ratio of 1 to melt and stir at 140°C. After mixing, 0.006 g of 2-phenylimidazole (0.2 wt% of BE188) as the catalyst is added at 90°C, and the other steps are the same as those of Example 4, so that the epoxy crosslinked product of Comparative Example 6 can be obtained.

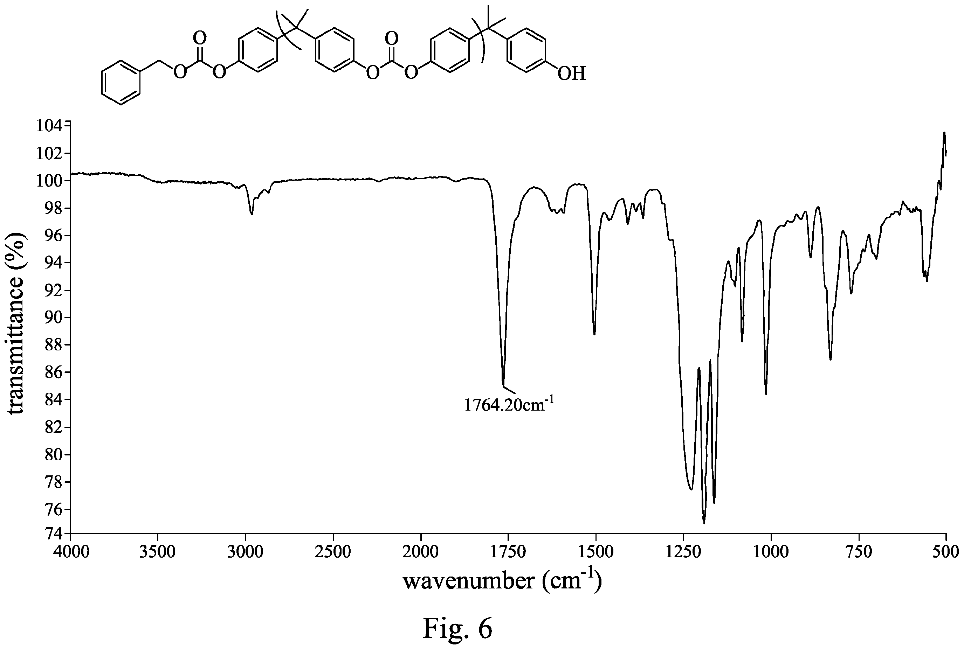

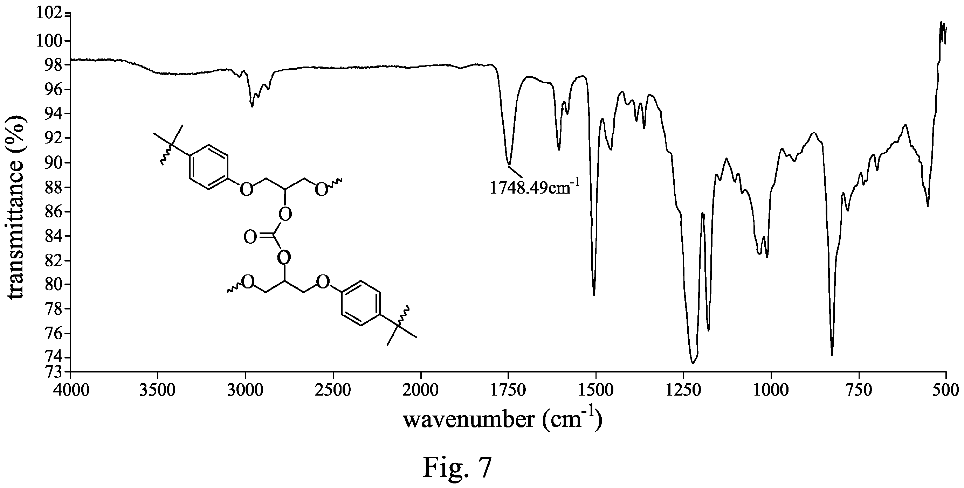

Reference is made to Fig. 6 and Fig. 7, wherein Fig. 6 is a FTIR spectrum of Example 1. Fig. 7 is a FTIR spectrum of Example 4. As shown in Fig. 6, the C=O characteristic peak on the carbonyl group in the polycarbonate oligomer of Example 1 is located at 1764 cm⁻¹. Furthermore, as shown in Fig. 7, after Example 1 is cured with the epoxy resin, the C=O characteristic peak on the carbonyl group in the epoxy crosslinked product of Example 4 is shifted to 1748 cm⁻¹, indicating that the carbonyl group is converted from the aromatic carbonate structure to the aliphatic carbonated structure, and the reaction equation thereof is shown in Table 2.

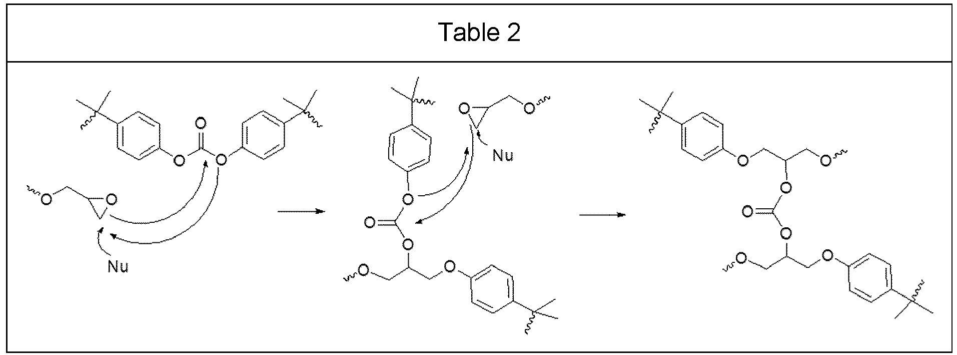

According to the above results, when using Comparative Example 1 and polycarbonate as the epoxy hardener, it needs to be heated to 140°C to melt and mix, and cooling will cause the sample block to be solid state, so that the catalyst only can be added at the high temperature. After adding the catalyst at the high temperature, the reaction will be triggered during the mixing process, which may easily cause the sample block to gel during the process, so that it is impossible to prepare the sample smoothly. Furthermore, the molecular weight of the polycarbonate oligomer of Example 1 to Example 3 of the present disclosure is lower than that of Comparative Example 1 and polycarbonate, so that the polycarbonate oligomer of Example 1 to Example 3 has the better mixability during the melt mixing, which can be melted and mixed with the epoxy resin at 110°C, and still remain in the molten state after cooling to 90°C. It is favorable for adding the catalyst, which has the good processing range, and the curable composition can be completely reacted when cured at 175°C to confirm that it has good reactivity with the epoxy resin and can be clearly used as the epoxy hardener. In addition, it can be mixed evenly under the high temperature melting, and has certain operability after adding the catalyst, and will not gel immediately, so that has the good processing time.

### <Thermal Property Evaluation>

The epoxy crosslinked product of Example 4 to Example 6 and Comparative Example 6 are performed the thermal property evaluation, which uses the differential scanning calorimeter (DSC) to measure the glass transition temperature (T_{g}) at a heating rate of 10°C/min, and the measurement results of the glass transition temperature (°C) are shown in Table 3.

| Table 3 | | | | |
|---|---|---|---|---|
| | Example 4 | Example 5 | Example 6 | Comparative Example 6 |
| T_{g} (°C) | 138.9 | 125.7 | 139.5 | 149.4 |

As shown in Table 3, the glass transition temperature of Example 4 to Example 6 will fluctuate with the molecular weight of the oligomer. Although the performance is slightly worse than the physical properties of the epoxy crosslinked product cured by phenolic hardener, it can still show the heat resistance greater than 120°C, which can be used in many applications.

### <Degradation of Epoxy Crosslinked Product>

In order to understand the degradability of the epoxy crosslinked product cured by the polycarbonate oligomer of the present disclosure. First, 0.2 g of the epoxy crosslinked product of Example 4 to Example 6 and Comparative Example 6 are respectively placed in the container with 4 g of ethanolamine (MEA), and heated in the oven. After reacting, the ethanolamine is taken out to obtain Example 7 to Example 9 and Comparative Example 7 with completed degradation. Example 7 to Example 9 is the result of the degradation reaction of the epoxy crosslinked product of Example 4 to Example 6, respectively, and Comparative Example 7 is the result of the degradation reaction of the epoxy crosslinked product of Comparative Example 6. The type of epoxy crosslinked product, the reaction temperature (°C), the reaction time (hrs), and the residual weight (%) selected in Example 7 to Example 9 and Comparative Example 7 are listed in Table 4.

| Table 4 | | | | |
|---|---|---|---|---|
| | Example 7 | Example 8 | Example 9 | Comparative Example 7 |
| Epoxy crosslinked product | Example 4 | Example 5 | Example 6 | Comparative Example 6 |
| Reaction temperature | 130 | 130 | 130 | 130 |
| Reaction time | 24 | 24 | 24 | 24 |
| Residual weight | 0 | 0 | 0 | 99 |

As shown in Table 4, Example 4 to Example 6 uses the polycarbonate oligomer of the present disclosure as the epoxy hardener. When the epoxy crosslinked product formed by the reaction with Example 4 to Example 6 and the epoxy resin needs to be degraded, only the aliphatic amine needs to be added and the aminolysis reaction can be performed by heating. In the end, the epoxy crosslinked product will be completely decomposed and the residual weight will be 0%. In contrast, Comparative Example 6 uses the phenolic resin as the hardener, which does not have the characteristics of being decomposable, so it still maintains the original state of the epoxy crosslinked product in the end.

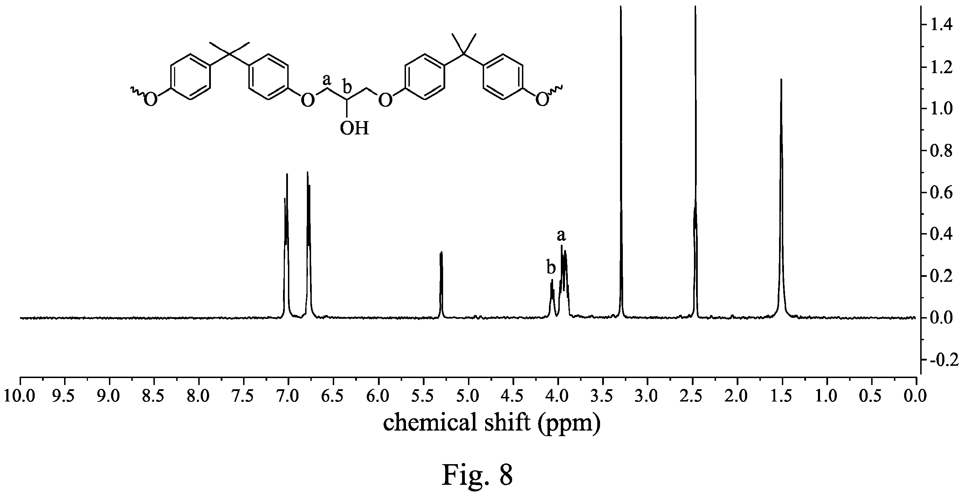

Furthermore, reference is made to Fig. 8, which is a ¹H-NMR spectrum of Example 7. Example 7 is the result obtained from the degradation reaction of the epoxy crosslinked product of Example 4 of the present disclosure with ethanolamine. After the reaction is completed, the excess ethanolamine is taken out, then washed with the ethanol, filtered and dried to obtain the light yellow solid product. The light yellow solid product is analyzed by ¹H-NMR, and the results thereof are shown in Fig. 8. The degradation product after the reaction between the epoxy crosslinked product of Example 4 and ethanolamine is the high-purity phenoxy resin, and the reaction equation thereof is shown in Table 5. Furthermore, after the measurement with gel chromatography permeability (GPC), the number average molecular weight (Mn) of phenoxy resin is 8,391, and the weight average molecular weight (Mw) of phenoxy resin is 10,612. Therefore, the phenoxy resin can be used as the polyol oligomer for modification or as the coating additive to achieve the goal of complete recycling.

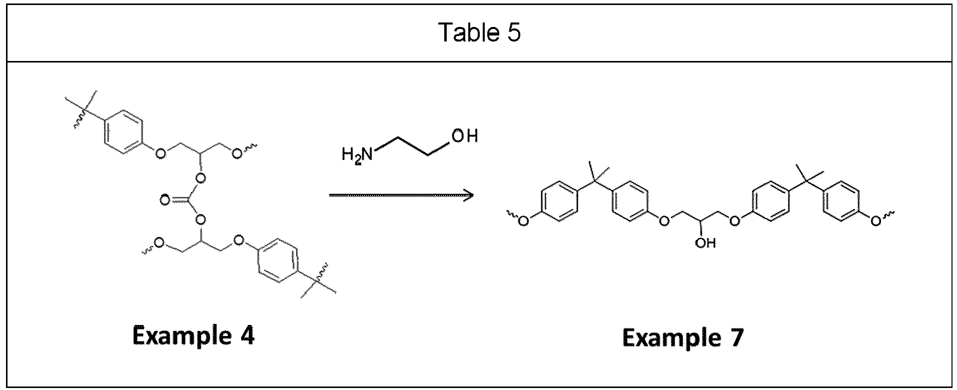

In conclusion, the polycarbonate oligomer of the present disclosure can be prepared by alcoholysis the waste polycarbonate, which can be used as the epoxy resin hardener. Furthermore, the polycarbonate oligomer of the present disclosure can be cured after being directly mixed with the epoxy resin. Compared with the related art, the use of solvent is reduced, and there is the significant breakthrough in the epoxy resin melting process. In addition, the high-temperature resistant crosslinked product can be obtained by curing in the high temperature, and the crosslinked product can be completely aminolysis after being soaked with the aliohatic amine and heated. Finally, the high-purity phenoxy resin is obtained, which is expected to be used as the additive back to the product cycle to achieve the purpose of waste recycling.

## Claims

1. A polycarbonate oligomer, **characterized in** comprising a structure represented by formula (I): 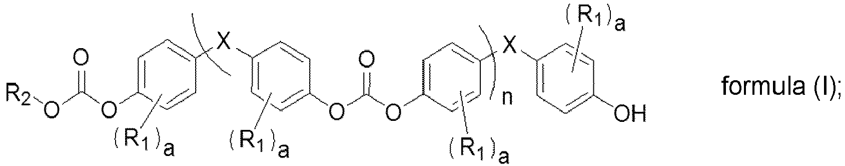
wherein R₁ is a hydrogen atom, an alkyl group of 1 to 6 carbon atoms, an allyl group, an alkoxy group of 1 to 6 carbon atoms, an aryl group of 6 to 12 carbon atoms or a halogen atom, R₂ is an alkyl group of 1 to 10 carbon atoms, an ether group of 1 to 10 carbon atoms, a cycloalkyl group of 3 to 6 carbon atoms, a structure represented by formula (1), formula (2), formula (3), formula (4), formula (5), formula (6) or formula (7): 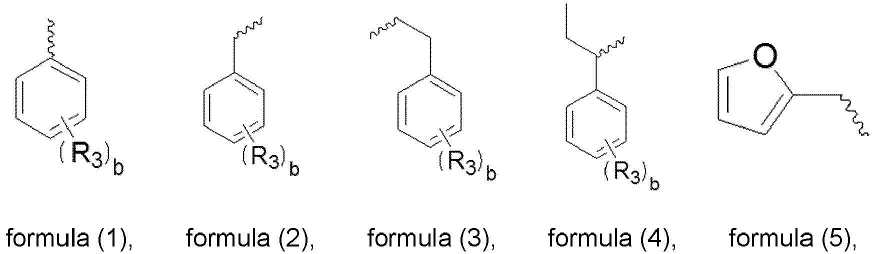 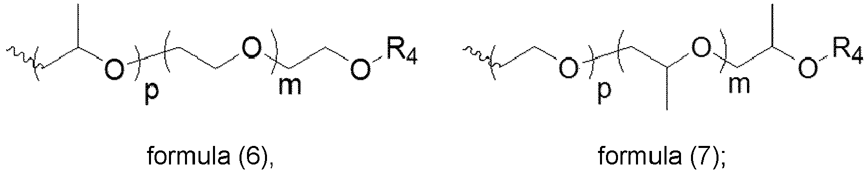
wherein X is a single bond, a structure represented by formula (8), formula (9), formula (10), formula (11), formula (12), formula (13), formula (14), formula (15), formula (16), formula (17) or formula (18): 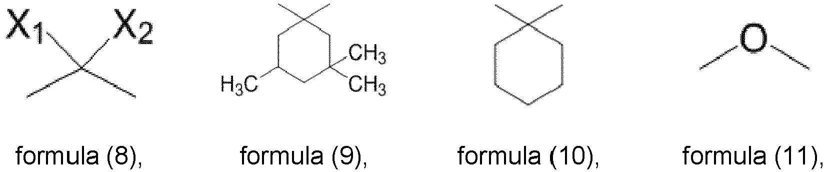 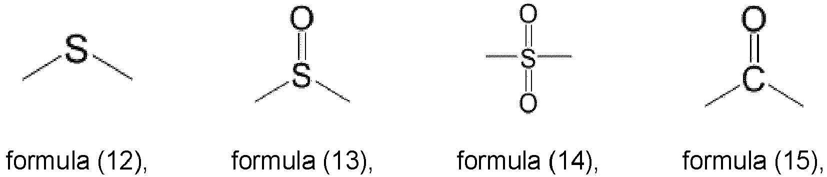 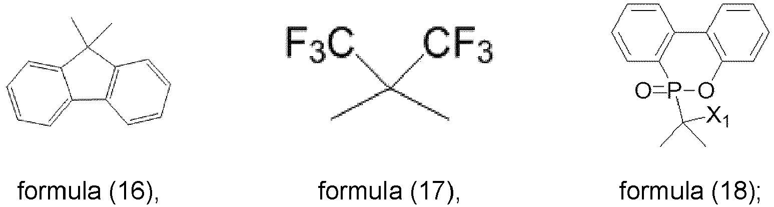
wherein R₃ is the hydrogen atom, the alkyl group of 1 to 6 carbon atoms, the allyl group, the alkoxy group of 1 to 6 carbon atoms, the aryl group of 6 to 12 carbon atoms or the halogen atom, R₄ is the hydrogen atom or a methyl group, a is an integer from 0 to 4, b is an integer from 0 to 5, n is any number from 0 to 60, m and p are each independently any number from 0 to 50;
wherein X₁ and X₂ are each independently the hydrogen atom, the alkyl group of 1 to 6 carbon atoms or the aryl group of 6 to 12 carbon atoms.

2. A manufacturing method for the polycarbonate oligomer (100) of claim 1, **characterized in** comprising:
performing a dissolving step (110), wherein a polycarbonate is dissolved in a solvent, and heated to a heating temperature to stir to form a first mixture;
performing an adding step (120), wherein a compound represented by formula (II) is added to the first mixture and maintained at the heating temperature to react to form a second mixture: 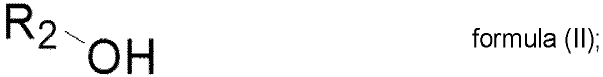
performing a washing step (130), wherein the second mixture is cooled and precipitation washed with an alcoholic solvent to form a third mixture; and
performing a filtering step (140), wherein the third mixture is filtered and dried to obtain the polycarbonate oligomer.

3. The manufacturing method for the polycarbonate oligomer (100) of claim 2, wherein the solvent is selected from a group consisting of N,N-dimethylacetamide, N-methylpyrrolidone, dimethylformamide, anisole, dimethyl sulfoxide, propylene glycol methyl ether acetate, and propylene glycol methyl ether propionate.

4. The manufacturing method for the polycarbonate oligomer (100) of claims 2 or 3, wherein the heating temperature is 100°C to 180°C.

5. The manufacturing method for the polycarbonate oligomer (100) of any one of claims 2 to 4, wherein a molar ratio of the polycarbonate oligomer to the compound represented by formula (II) is 1:10 to 1:90.

6. A curable composition, **characterized in** comprising the polycarbonate oligomer of claim 1, an epoxy resin and a catalyst, which are mixed for sample preparation at a mixing temperature, wherein an equivalence ratio of a carbonate group of the polycarbonate oligomer to an epoxy group of the epoxy resin is 0.5 to 3.0.

7. The curable composition of claim 6, wherein the catalyst is selected from a group consisting of 4-dimethylaminopyridine, imidazole, 2-methylimidazole, 2-phenylimidazole and 2-ethyl-4-methylimidazole.

8. The curable composition of claims 6 or 7, wherein an added amount of the catalyst is ranged from 0.05% by weight to 5.0% by weight of an amount of the epoxy resin.

9. The curable composition of any one of claims 6 to 8, wherein the mixing temperature is 90°C to 170°C.

10. An epoxy crosslinked product, which is obtained by performing a curing reaction with the curable composition of any one of claims 6 to 9.

11. The epoxy crosslinked product of claim 10, wherein the curing reaction is completed by heating the curable composition, and a curing temperature of the curing reaction is 150°C to 240°C.

12. A method for degrading an epoxy crosslinked product by aminolysis (300), **characterized in** comprising:
providing the epoxy crosslinked product (310) of claims 10 or 11; and
performing a degrading step (320), wherein an aliphatic amine group-containing compound is reacted with the epoxy crosslinked product to degrade the epoxy crosslinked product by aminolysis.

13. The method for degrading the epoxy crosslinked product by aminolysis (300) of claim 12, wherein the epoxy crosslinked product is degraded to form a phenoxy resin represented by formula (III): 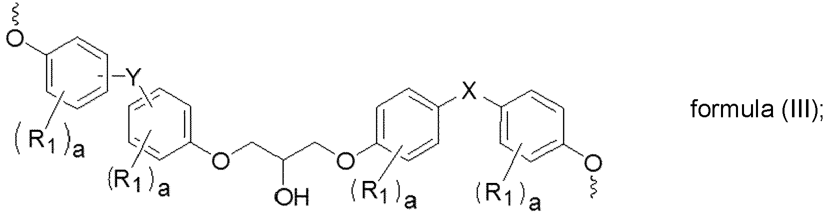 wherein Y is the single bond, the structure represented by formula (8), formula (9), formula (10), formula (11), formula (12), formula (13), formula (14), formula (15), formula (16), formula (17), formula (18) or a structure represented by formula (19):
